# EUROPÄISCHE PATENTANMELDUNG

(11) **EP 2 584 415 A1**
(43) Veröffentlichungstag der Anmeldung: **24.04.2013**
(21) Anmeldenummer: 11185751.2
(22) Anmeldetag: 19.10.2011
(51) Int. Cl.: G05B 19/042, G05B 19/05

(54) **Verfahren zum Betrieb eines Automatisierungsgeräts zum Zugriff auf eine Dokumentationsablage**

(71) Anmelder: Siemens Aktiengesellschaft, 80333 München (DE)
(72) Erfinder: Büssert, Jürgen, 91338 Igensdorf (DE); Hamm, Carsten, Dr., 91058 Erlangen (DE); Pernozzoli, Arno, Dr., 91091 Grossenseebach (DE)

(57) **Zusammenfassung**

Die Erfindung betrifft ein Verfahren zum Betrieb eines Automatisierungsgeräts (10) mit einem Speicher (20), in den ein Steuerungsprogramm (22) ladbar ist, das im Betrieb des Automatisierungsgeräts (10) durch eine Verarbeitungseinheit (23) des Automatisierungsgeräts (10) zur Steuerung und/oder Überwachung eines technischen Prozesses (18) ausgeführt wird, wobei ein im Speicher (20) vorgehaltenes Basisprogramm (24) des Automatisierungsgeräts (10) das Automatisierungsgerät (10) selbst und die Ausführung des Steuerungsprogramms (22) überwacht und Überwachungsergebnisse in einer im Speicher (20) abgelegten Statusinformation (28) protokolliert, wobei bei dem Verfahren mit der Statusinformation (28) ein automatischer Zugriff auf eine Dokumentationsablage (36) auf einem im Internet (32) erreichbaren entfernten Rechner (34) erfolgt.

## Beschreibung

Die vorliegende Erfindung betrifft ein Verfahren zum Betrieb eines Automatisierungsgeräts zum automatischen Zugriff auf eine Dokumentationsablage. Das Automatisierungsgerät umfasst in an sich bekannter Art und Weise einen Speicher und eine Verarbeitungseinheit in Form von oder nach Art eines Mikroprozessors. In den Speicher ist ein Steuerungsprogramm geladen oder ladbar, das im Betrieb des Automatisierungsgeräts durch die Verarbeitungseinheit ausgeführt wird. Durch die Ausführung des Steuerungsprogramms wird mit dem Automatisierungsgerät eine Steuerung und/oder Überwachung eines technischen Prozesses bewirkt oder realisiert.

Eine Dokumentationsablage ist jede Zusammenstellung von Dokumentation oder Information zu einem Automatisierungsgerät und/oder dessen Funktionalität. Die Dokumentationsablage kann demnach hardware- und/oder softwarebezogene Informationen umfassen. Als Beispiel für eine hardwarebezogene Information kommt eine Dokumentation zum Ein- und Ausbau von Speichermodulen, Kommunikationsbaugruppen und dergleichen in Betracht. Als softwarebezogene Information kommt eine Dokumentation über von der Verarbeitungseinheit des Automatisierungsgeräts mittelbar oder unmittelbar ausführbare Funktionen, also z.B. logische Verknüpfungen, Reglerfunktionen, usw., in Betracht, wie auch eine Dokumentation über Bibliotheken und sonstige Mittel zur Erweiterung des Funktionsumfangs eines Automatisierungsgeräts.

Die bisherige Problematik beim Zugriff auf eine Dokumentationsablage besteht darin, dass bei einer Dokumentationsablage in Papierform ein manueller Zugriff auf die entsprechenden Abschnitte der Dokumentationsablage erforderlich ist, was zeitaufwendig ist und vor allem keinen automatischen Zugriff auf relevante Aspekte der Dokumentationsablage ermöglicht.

Bei einer elektronischen Dokumentationsablage, bei der die ansonsten oder zusätzlich in Papierform vorliegenden Informationen in Form einer computerlesbaren Datei, z.B. einer Datei im sogenannten portable document format (PDF) verfügbar sind, stehen zwar erweiterte Mittel beim Zugriff auf die von einer solchen Dokumentationsablage umfassten Informationen zur Verfügung, etwa eine Möglichkeit, nach bestimmten Schlagworten zu suchen, dennoch muss die jeweilige Suche nach wie vor vom Benutzer veranlasst werden und die Qualität des Suchergebnisses kann nur so gut sein, wie sich die für den Benutzer jeweils relevante Information durch Schlagworte und dergleichen beschreiben oder eingrenzen lässt.

Eine Aufgabe der vorliegenden Erfindung besteht entsprechend darin, ein Verfahren zum Betrieb eines Automatisierungsgeräts der eingangs genannten Art anzugeben, das in verbesserter Form einen automatischen Zugriff auf eine Dokumentationsablage erlaubt.

Diese Aufgabe wird erfindungsgemäß mit den Merkmalen des Anspruchs 1 gelöst. Dazu ist bei einem Verfahren zum Betrieb eines Automatisierungsgeräts der eingangs genannten Art, bei dem ein im Speicher vorgehaltenes Basisprogramm des Automatisierungsgeräts das Automatisierungsgerät selbst und die Ausführung des Steuerungsprogramms überwacht und Überwachungsergebnisse in einer im Speicher abgelegten Statusinformation protokolliert, vorgesehen, dass ein automatischer Zugriff auf eine Dokumentationsablage auf einen im Internet erreichbaren entfernten Rechner mit der Statusinformation erfolgt.

Das Basisprogramm des Automatisierungsgeräts kann z.B. ein Betriebssystem oder eine Betriebssystemfunktionalität sein, die von der Verarbeitungseinheit des Automatisierungsgeräts unabhängig vom jeweiligen Steuerungsprogramm ausgeführt wird, wobei normalerweise das jeweilige Steuerungsprogramm unter Kontrolle des Basisprogramms ausgeführt wird. Das Basisprogramm ist auf diese Weise in der Lage, sowohl das Automatisierungsgerät selbst wie auch die Ausführung des Steuerungsprogramms zu überwachen. Überwachungsergebnisse, die sich bei einer solchen Überwachung ergeben, werden in Form einer im Speicher abgelegten Statusinformation protokolliert. Die Überwachungsergebnisse und die resultierende Statusinformation können sich demnach auf Betriebszustände des Automatisierungsgeräts beziehen und z.B. Informationen zu einer etwaigen hardwarebedingten Fehler- oder Störungssituation umfassen. Des Weiteren können sich solche Überwachungsergebnisse und resultierende Statusinformationen zusätzlich oder alternativ auf die Ausführung des Steuerungsprogramms und etwaige softwarebezogene Fehler- oder Ausnahmesituationen beziehen. Insgesamt lässt sich feststellen, dass mit dem Begriff Statusinformation eine Information gemeint ist, die geeignet ist, bestimmte Zustände des Automatisierungsgeräts zu beschreiben und zwar entweder im Hinblick auf dessen Hardware und deren jeweiligen Betriebszustand oder auf die vom Automatisierungsgerät ausgeführte Software, also das oder jedes Steuerungsprogramm und ggf. das Basisprogramm oder auf Informationen sowohl zur Hardware wie auch zur Software.

Indem der automatische Zugriff auf die Dokumentationsablage mit der Statusinformation erfolgt, kann der entfernte Rechner, auf dem die Dokumentationsablage im Internet erreichbar ist, anhand der Statusinformation zu der Statusinformation passende Inhalte der Dokumentationsablage auswählen und dem Benutzer anbieten, ggf. in Form einer Auswahlliste, wenn eine Gruppe von Inhalten zu der Statusinformation passt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn der automatische Zugriff auf die Dokumentationsablage mit der Statusinformation sowie einer das jeweilige Automatisierungsgerät identifizierenden Kennung erfolgt, ist ein besonders spezifischer Zugriff auf die Dokumentationsablage möglich, indem nur solche Inhalte der Dokumentationsablage abgerufen oder zur Verfügung gestellt werden, die für das durch die jeweilige Kennung identifizierte Automatisierungsgerät relevant sind.

Wenn der automatische Zugriff auf die Dokumentationsablage zumindest mit der Statusinformation und anhand einer im Speicher des Automatisierungsgeräts vorgehaltenen, projektierbaren Ontologie erfolgt, kann eine Interpretation der Statusinformation anhand der jeweiligen Ontologie erfolgen. Auf diese Weise sind z.B. Verknüpfungen von Zuständen, die in der Statusinformation abgebildet sind, möglich, z.B. derart, dass eine softwarebezogene Statusinformation in Abhängigkeit von einer eventuell gleichzeitig vorliegenden hardwarebezogenen Statusinformation anders ausgewertet wird, wenn die hardwarebezogene Statusinformation nicht oder in anderer Form vorliegt. Auf diese Art und Weise können unterschiedliche Betriebszustände sowohl im Hinblick auf die Hardware wie auch im Hinblick auf die Software des Automatisierungsgeräts erfasst werden und spezifische Zugriffe auf die Dokumentationsablage erfolgen, die der jeweiligen Betriebssituation oder dem Zustand des Automatisierungsgeräts Rechnung tragen. Als Ontologie oder anstelle einer Ontologie kommt grundsätzlich auch jede Such- und/oder Verknüpfungsfunktionalität in Betracht, die zu bestimmten Eingangsdaten, also der Statusinformation und/oder der Kennung, ggf. auch historischen Statusinformationen, in der Dokumentationsablage zu den jeweiligen Eingangsdaten passende oder für die Eingangsdaten relevante Inhalte ermitteln und direkt oder in Form einer Referenz auf die jeweiligen Inhalte an das anfragende Automatisierungsgerät zurückliefern kann.

Wenn die projektierbare Ontologie im Speicher des jeweiligen Automatisierungsgeräts vorgehalten wird, kann eine solche Ontologie jeweils spezifisch für das jeweilige Automatisierungsgerät vorgehalten werden und die lokale Verfügbarkeit der Ontologie vermeidet die Notwendigkeit einer externen Vor- oder Weiterverarbeitung der Statusinformationen, so dass unmittelbar mit dem Ausgang der jeweiligen Ontologie anhand der Statusinformation der Zugriff auf die im Internet erreichbare Dokumentationsablage erfolgen kann. Alternativ oder zusätzlich ist auch möglich, die projektierbare Ontologie im Bereich der Dokumentationsablage vorzusehen. Dies vermeidet die Notwendigkeit, im Speicher des Automatisierungsgeräts Speicherplatz für die Ontologie reservieren zu müssen. Zudem ermöglicht eine zentrale Ontologie eine jederzeitige Anpassung derselben, so dass auch nach Auslieferung eines Automatisierungsgeräts mit einer von diesem generierten Statusinformation zunächst ein Zugriff auf die im Bereich der Dokumentationsablage vorgehaltene Ontologie und mit deren Ausgang ein Zugriff auf die Dokumentationsablage erfolgen kann. Anstelle einer zentralen Ontologie kann auch eine Mehrzahl derartiger Ontologien vorgesehen sein, wobei eine zu dem jeweiligen Automatisierungsgerät passende Ontologie anhand einer das jeweilige Automatisierungsgerät identifizierenden Kennung auswählbar ist. In einem solchen Szenario werden demnach diese Kennung und die einen Zustand des Automatisierungsgeräts beschreibende Statusinformation an den im Internet erreichbaren Rechner mit der Dokumentationsablage übermittelt. Zumindest anhand der Kennung wird eine zu dem die Anfrage sendenden Automatisierungsgerät passende Ontologie ausgewählt. Der so ausgewählten Ontologie wird die übermittelte Statusinformation als Eingangswert zugeführt und ein resultierender Ausgangswert schließlich zum automatischen Zugriff auf die Dokumentationsablage verwendet.

Wenn Zugriffe auf die Dokumentationsablage im Bereich der Dokumentationsablage protokolliert werden, indem zumindest die das jeweilige Automatisierungsgerät identifizierende Kennung gespeichert wird, ist bei einem späteren Zugriff desselben Automatisierungsgeräts auf die Dokumentationsablage ein Zugriff auf vorherige Zugriffe auf die Dokumentationsablage möglich, so dass solche vorherigen Zugriffe als zusätzliche Auswahlmöglichkeit dargestellt werden können. Für solche Zwecke umfasst die das jeweilige Automatisierungsgerät identifizierende Kennung ausreichend spezifische Daten, also nicht nur eine Typbezeichnung oder dergleichen, sondern z.B. auch eine Seriennummer oder Ähnliches.

Zusätzlich oder alternativ ist möglich, dass Zugriffe auf die Dokumentationsablage im Speicher des Automatisierungsgeräts protokolliert werden, indem Art und Umfang des Zugriffs auf die Dokumentationsablage gespeichert werden, z.B. in Form einer Referenz auf die jeweils abgerufenen Inhalte. Dies vermeidet die Belegung von Speicherplatz für eine entsprechende zentrale Protokollierung solcher Zugriffe im Bereich der Dokumentationsablage und konserviert für das jeweilige Automatisierungsgerät, mit dem bereits vorher Zugriffe auf die Dokumentationsablage erfolgt sind, zumindest diese vorherigen Zugriffe, so dass bereits abgerufene Inhalte leicht wieder identifizierbar sind.

Ein Szenario, in dem eine solche lokale oder entfernte Protokollierung von Zugriffen auf die Dokumentationsablage sinnvoll ist, ist z.B. dann gegeben, wenn ein Bediener eines Automatisierungsgeräts sich über eine Software- oder Hardwarefunktionalität des Automatisierungsgeräts orientiert, mit der er bisher nicht vertraut ist, so dass die Notwendigkeit eines mehrfachen Zugriffs auf die selbe Information wahrscheinlich wird.

Wenn Zugriffe auf die Dokumentationsablage im Bereich der Dokumentationsablage protokolliert werden, indem zumindest die Statusinformation, mit welcher der Zugriff auf die Dokumentationsablage erfolgt ist, protokolliert wird, ist für einen Verwalter der Dokumentationsablage, also z.B. einen Hersteller der Automatisierungsgeräte, für die ein solcher Zugriff auf eine Dokumentationsablage möglich gemacht werden soll, erkennbar, welche Inhalte der Dokumentationsablage in welchem Umfang abgerufen wurden. Diese Information kann genutzt werden, um den Inhalt und die Qualität der Dokumentationsablage zu optimieren. Häufig benutzte Inhalte der Dokumentationsablage kommen dann nämlich für eine regelmäßige Revision in Betracht, um deren Aktualität und ggf. auch eine bessere Verständlichkeit für Benutzer mit unterschiedlichen Erfahrungshorizonten mit dem jeweiligen Automatisierungsgerät zu optimieren. Wenn zusätzlich zu der bloßen Anzahl der Zugriffe auf einzelne Teile der Dokumentationsablage auch noch protokolliert wird, mit welcher Statusinformation der Zugriff auf den jeweiligen Teil der Dokumentationsablage erfolgt ist, ist für den Betreiber der Dokumentationsablage z.B. erkennbar, ob die jeweilige Information aufgrund einer in der Statusinformation kodierten Fehlersituation am Automatisierungsgerät abgerufen wurde, oder ob der Zugriff in einem normalen Betriebszustand des jeweiligen Automatisierungsgeräts erfolgt ist und daher wohl im Wesentlichen auf ein allgemeines Informationsbedürfnis des jeweiligen Benutzers zurückgeht, und so weiter. Solche Informationen, speziell die Verknüpfung bestimmter Zustandsinformationen des Automatisierungsgeräts mit der jeweils in Zugriff genommenen Information der Dokumentationsablage liefern für den Betreiber der Dokumentationsablage wertvolle Hinweise für deren weitere Optimierung, aber ggf. auch wertvolle Hinweise für eine Optimierung des Automatisierungsgeräts, wenn nämlich z.B. bestimmte Informationen häufig in Zusammenhang mit bestimmten Statusinformationen abgerufen werden, etwa um eine Fehlersituation zu bereinigen, und sich mit der an der in Zugriff genommenen Stelle der Dokumentationsablage verfügbaren Information die Fehlersituation beseitigen lässt. Dann kann evtl. eine solche Fehlerbeseitigungsmöglichkeit oder ein diesbezüglicher Hinweis auch direkt im Automatisierungsgerät implementiert werden.

Wenn Zugriffe auf die Dokumentationsablage im Bereich der Dokumentationsablage protokolliert werden, indem jeweils zumindest eine Referenz auf die jeweils abgerufenen Inhalte der Dokumentationsablage protokolliert wird, ist eine statistische Auswertung über die Häufigkeit des Zugriffs auf bestimmte Inhalte der Dokumentationsablage möglich, um diese zu verbessern oder um einzelne Inhalte weiter sinnvoll zu unterteilen, so dass einem Benutzer genau die für ihn relevanten Informationen aus der Dokumentationsablage angeboten werden und überflüssige, weil derzeit nicht relevante Informationen von der Übermittlung ausgeschlossen werden.

Insgesamt betrifft die Erfindung damit auch ein Verfahren zum Betrieb zumindest eines im Internet erreichbaren Rechners als Dokumentationsablage für eine Mehrzahl von Automatisierungsgeräten wie hier und nachfolgend beschrieben, wobei Zugriffe durch jeweils ein Automatisierungsgerät auf die Dokumentationsablage protokolliert werden und wobei im Rahmen der Protokollierung aufgenommene Daten eine Auswertung einer Häufigkeit eines Zugriffs auf bestimmte Inhalte der Dokumentationsablage erlauben.

Die oben genannte Aufgabe wird auch mit einem Automatisierungsgerät der Eingangs genannten Art gelöst, das nach dem Verfahren wie hier und im Folgenden beschrieben arbeitet und dazu Mittel zur Durchführung des Verfahrens umfasst. Die Erfindung ist dabei in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung oder ein Antriebssystem, in dessen Speicher als Mittel zur Durchführung des Verfahrens und seiner Ausgestaltungen ein solches Computerprogramm geladen oder ladbar ist.

Der Vorteil der Erfindung und ihrer Ausgestaltungen besteht damit insbesondere darin, dass das Vorhalten der Dokumentationsablage auf zumindest einem im Internet erreichbaren Rechner oder einer Gruppe im Internet erreichbarer Rechner (in der Fachterminologie häufig auch als "cloud" bezeichnet) eine beinahe unerschöpflich Möglichkeit zur Ablage relevanter Informationen bietet. Kombiniert mit einer zum Zugriff auf die

Dokumentationsablage verwendeten Abfrageoberfläche ergeben sich umfangreiche Analysemöglichkeiten. Dies und eine Auswertung der abgerufenen Inhalte der Dokumentationsablage ermöglicht eine Analyse eventueller Problempunkte des jeweils dokumentierten Produkts oder der dokumentierten Produkte. Als dokumentierte Produkte kommt jedes Automatisierungsgerät und dort dessen Hard- und/oder Software in Betracht. Als automatisch generierte Statusinformation zum Zugriff auf die Dokumentationsablage kommt auch eine Kombination aus einer automatisch generierten oder in sonstiger Form im Automatisierungsgerät abrufbaren Instanzinformation mit einer Zustandsinformation, die Hard- und/oder Softwarezustände des Automatisierungsgeräts beschreibt, in Betracht. Die Instanzinformation ist ein Beispiel für eine Kennung des Automatisierungsgeräts und kann neben einer das Automatisierungsgerät identifizierenden Kennung oder anstelle einer solchen Kennung auch eine entsprechende Kennung zur Identifizierung der auf dem Automatisierungsgerät ablaufenden und/oder verfügbaren Software umfassen. Die Abfrageoberfläche "erkennt" also, welche Geräte- und Softwareversionen mit welchen Detailanfragen besonders häufig Unterstützung benötigen.

Darüber hinaus ist eine standardisierte Schnittstelle zu der Ablage der jeweiligen Inhalt in der Dokumentationsablage denkbar. Eine Client Applikation auf einem Automatisierungsgerät könnte die eigenen Instanz- und Zustandsinformationen verwenden um bei bestehender Internetverbindung dem Anwender lokal die relevante, aktuelle Dokumentation aus der Dokumentationsablage in der Cloud, also im entfernten Rechner oder im entfernten Rechnerverbund, anzuzeigen. Die Schnittstelle kann auf Basis bekannter Protokolle, wie zum Beispiel SOAP (simple object access protocol) mit einer sogenannten Web Service Description Language (WSDL) realisiert werden. Bei Verwendung verschlüsselnder Protokolle, etwa nach dem https-Standard, ist auch eine sichere, verschlüsselte Übermittlung der abgerufenen Inhalte der Dokumentationsablage möglich.

Solche Dienste können auch Herstellern von Maschinen, die mit dem jeweiligen Automatisierungsgerät gesteuert und/oder überwacht werden, zur Verfügung gestellt werden, um neben der Dokumentation von Hard- und/oder Softwareaspekten des jeweiligen Automatisierungsgeräts eine Dokumentation entsprechender Aspekte des jeweils automatisierten technischen Prozesses, also zumindest einzelner davon umfasster Maschinen, Aggregate, usw. zu ermöglichen.

Darüber hinaus kommt auch Folgendes in Betracht: Die Erfassung welche Inhalte in welcher Reihenfolge und welcher Häufigkeit abgefragt wurden, erlauben Hinweise auf Details oder zusätzlich oder vergleichbare Inhalte, die einen Nutzer der Dokumentationsablage auch interessieren könnten, wie dies von einem großen Anbieter von Medien, wie Bücher und dergleichen, im Internet bekannt ist. Das Speichern nutzerbezogener Profile erlaubt die Unterstützung einer Historie. Der Nutzer kann sich zum Beispiel die zuletzt abgerufenen Inhalte oder Referenzen auf die zuletzt abgerufenen Inhalte anzeigen lassen. Eine dynamische Bereitstellung von Inhalten in der Dokumentationsablage erlaubt auch eine Verknüpfung (Verlinkung) mit weiterführenden Informationen. Zum Beispiel kann eine Beschreibung einer Fehlermeldung nachträglich um zusätzliche Verknüpfungen zu Lösungsvorschlägen in sogenannten FAQs oder zu passenden, sogenannten Hotfixes oder Service Packs und dergleichen ergänzt werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen

Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungsgerät zur Steuerung eines technischen Prozesses, das auf einen im Internet erreichbaren und als Dokumentationsablage fungierenden Rechner zugrifft nimmt, um anhand bestimmter Zustände des Automatisierungsgeräts Informationen aus der Dokumentationsablage abzurufen, und
- FIG 2 bis 4: unterschiedliche Darstellungen des anhand von FIG 1 erläuterten Prinzips.

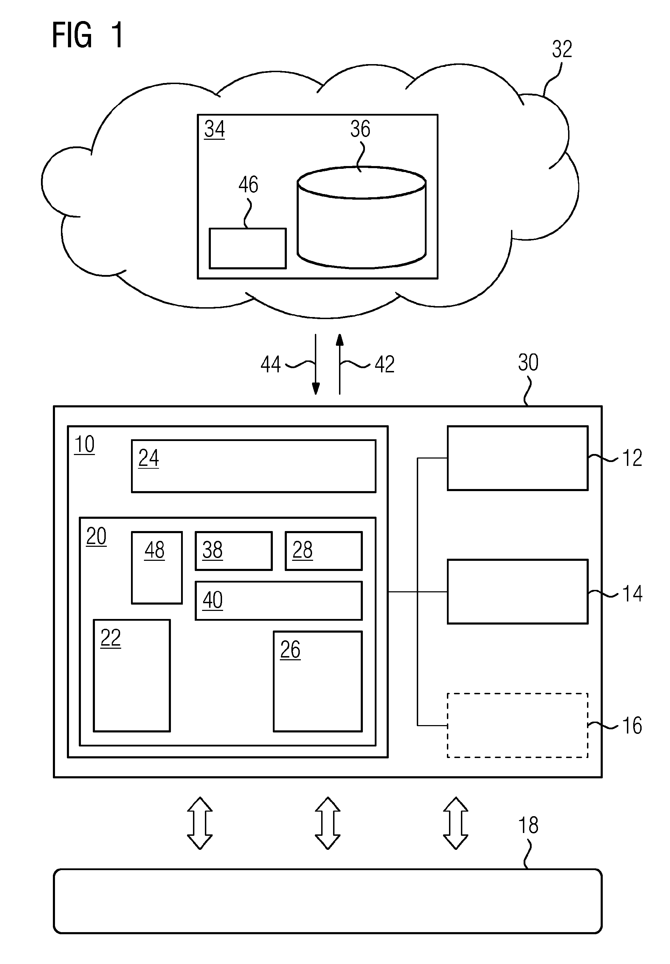

FIG 1 zeigt ein Automatisierungsgerät 10, das ggf. im Verbund mit anderen, gleichartigen Automatisierungsgeräten 12, 14, 16 einen nicht näher dargestellten technischen Prozess 18 in an sich bekannter Art und Weise steuert und/oder überwacht.

Das Automatisierungsgerät 10 umfasst in ebenfalls an sich bekannter Art und Weise einen Speicher 20 in den ein Steuerungsprogramm 22 geladen oder ladbar ist. Das Steuerungsprogramm 22 wird im Betrieb des Automatisierungsgeräts 10 durch eine Verarbeitungseinheit 24 des Automatisierungsgeräts 10 in Form von oder nach Art eines Mikroprozessors zur Steuerung und/oder Überwachung des technischen Prozesses 18. ausgeführt. Ein ebenfalls im Speicher 20 vorgehaltenes Basisprogramm 26 des Automatisierungsgeräts 10 überwacht das Automatisierungsgerät 10 selbst und die Ausführung des Steuerungsprogramms 22. Dabei erhaltene oder generierte Überwachungsergebnisse werden in einer im Speicher 20 abgelegten Statusinformation 28 protokolliert. Bei dem Basisprogramm 26 handelt es sich zum Beispiel um ein Betriebssystem oder eine sogenannte Laufzeitumgebung (in der Fachterminologie als Runtime-System oder kurz nur als Runtime bezeichnet) des Automatisierungsgeräts 10 oder Kombination aus Betriebssystem und Laufzeitumgebung. Das Basisprogramm 26 oder eine Funktionalität des Basisprogramms 26 kommt als Ort der Implementation des hier beschriebenen Verfahrens und seiner Ausgestaltungen in Betracht. Dafür erhält das Basisprogramm 26 oder eine Funktionalität desselben, also zum Beispiel ein Unterprogramm, Programmcode-Mittel, also Computerprogrammanweisungen, um alle Schritte des Verfahrens wie hier und nachfolgend beschrieben, auszuführen.

Das oder jedes Automatisierungsgerät 10; 12-16 oder das durch die Automatisierungsgeräte 10; 12-16 gebildete Automatisierungssystem 30 hat Zugriff auf zumindest einen im Internet 32 erreichbaren entfernten Rechner 34 und eine dort oder auf einem Netzwerk solcher Rechner vorgehaltene Dokumentationsablage 36. Die Zugriffsmöglichkeit vom jeweiligen Automatisierungsgerät 10; 12-16 auf den oder jeden entfernten Rechner 34 ist eine an sich bekannte Ethernet-Verbindung oder dergleichen und erfolgt unter Verwendung eines im Internet gebräuchlichen Protokolls.

Der Zugriff auf die Dokumentationsablage 36 erfolgt automatisch mit der bei der Überwachung des Automatisierungsgeräts 10 oder der Überwachung der Ausführung des Steuerungsprogramms 22 aufgenommenen Statusinformation 28. Indem der Zugriff mit der Statusinformation 28 erfolgt, kann aus der Gesamtheit der in der Dokumentationsablage 36 zusammengestellten Informationen eine zu der Statusinformation 28 passende Information abgerufen und zum Automatisierungsgerät 10 übertragen und dort zum Beispiel an einem Monitor angezeigt, temporär oder dauerhaft gespeichert und/oder ausgedruckt werden.

Bei besonderen Ausführungsformen des Verfahrens erfolgt der automatische Zugriff auf die Dokumentationsablage 36 mit der Statusinformation 28 und einer das jeweilige Automatisierungsgerät 10 identifizierenden Kennung 38, so dass die eine beim Abruf einer zur jeweiligen Statusinformation 28 passenden Information aus der Dokumentationsablage 36 zusätzlich noch eine Auswahl hinsichtlich der Eignung der jeweiligen Information oder von Teilen der jeweiligen Information für das anfragende Automatisierungsgerät 10 getroffen werden kann.

Der automatische Zugriff auf die Dokumentationsablage 36 kann darüber hinaus zumindest mit der Statusinformation 28 - ggf. mit der Statusinformation 28 und der Kennung 38 - sowie anhand einer im Speicher 20 vorgehaltenen, projektierbaren Ontologie 40 erfolgen. Eine Ontologie 40 ist bekanntlich eine Möglichkeit, "Wissen" in digitalisierter und formaler Form zwischen Anwendungsprogrammen und Diensten auszutauschen. Ein solcher Austausch findet hier zwischen dem jeweiligen Automatisierungsgerät 10 und dem entfernten Rechner 34 und/oder der Dokumentationsablage 36 statt. Die Ontologie 40 ermöglicht dabei unterschiedliche Formen einer "Übersetzung" der Statusinformation 28 und/oder der Kennung 38 und/oder einer Zusammenfassung von Statusinformation 28 und Kennung 38. Mit einer solchen Übersetzung ergibt sich automatisch eine für den entfernten Rechner 34 und/oder die Dokumentationsablage 36 interpretierbare Anfrage 42, auf die aus der Dokumentationsablage 36 eine zu der Anfrage 42 passende Information abrufbar und in Form einer Antwort 44 auf die Anfrage 42 an das Automatisierungsgerät 10 übermittelbar ist. Die Ontologie 40 kann (nicht dargestellt) genauso auf Seiten des im Internet 32 erreichbaren Rechners 34, also im Bereich der Dokumentationsablage 36 vorgehalten sein und dort die in gleicher Art wie oben beschrieben eine Übersetzung der Statusinformation 28 und/oder der Kennung 38 zum Zugriff auf die Dokumentationsablage 36 vornehmen. Die Anfrage 42 umfasst dann nur die Statusinformation 28 und/oder die Kennung 38 und die jeweilige Übersetzung erfolgt entfernt vom Automatisierungsgerät 10. Genauso kann eine Ontologie 40 sowohl auf Seiten des Automatisierungsgeräts 10 wie auch entfernt vom Automatisierungsgerät 10 vorgesehen sein. Die automatisierungsgerätsseitige Ontologie 40 übernimmt dann gleichsam eine Vorverarbeitung der Statusinformation 28 und/oder der Kennung 38 und eine so generierte Anfrage 42 wird von der dokumentationsablagenseitigen Ontologie weiter und für einen Zugriff auf die Dokumentationsablage 36 verarbeitet. Eine solche Abfrage kann nur den Ausgang der automatisierungsgerätsseitigen Ontologie 40 oder zusätzlich die Statusinformation 28 und/oder die Kennung 38 umfassen.

Zugriffe auf die Dokumentationsablage 36 lassen sich zu Protokollierungszwecken sowohl im Bereich der Dokumentationsablage 36 wie auch im Bereich des zugreifenden Automatisierungsgeräts 10 protokollieren. Dafür wird zum Beispiel bei einer Protokollierung in Bereich der Dokumentationsablage 36 zumindest die das jeweilige Automatisierungsgerät 10 identifizierenden Kennung 38 gespeichert. Dies kann in einer beim entfernten Rechner 34 vorgehaltenen Datenbasis 46 erfolgen und bei wiederholten Zugriffen desselben Automatisierungsgeräts 10 auf die Dokumentationsablage 36 kann anhand des Inhalts der Datenbasis 46 und der dort gespeicherten sowie der beim Zugriff übermittelten Kennung 38 ermittelt werden, welche früheren Zugriffe bereits auf die Dokumentationsablage 36 erfolgt sind, um diese wieder zu verwenden und/oder ggf. als zusätzliche Auswahlmöglichkeit anzubieten. Genauso ist möglich, die beim Zugriff verwendete Statusinformation 28 zu protokollieren. Dies kann in derselben Datenbasis 46 oder einer eigenen Datenbasis erfolgen. Eine Protokollierung der beim Zugriff verwendeten Statusinformationen 28 eignet sich für statistische Auswertungen.

Alternativ oder zusätzlich kommt in Betracht, Zugriffe auf die Dokumentationsablage 36 im Speicher 20 des Automatisierungsgeräts 10 zu protokollieren, indem in einer dort vorgesehenen Datenbasis 48 Art und Umfang des Zugriffs auf die Dokumentationsablage 36 gespeichert werden, zum Beispiel in Form einer chronologischen Protokollierung von Statusinformation 28 und/oder Kennung 38 und/oder einer jeweils resultierenden Anfrage 42. Auch bei einer solchen Protokollierung stehen die für den Zugriff auf die Dokumentationsablage 36 verwendeten Daten für statistische Auswertungen oder evtl. erneute Zugriffe anhand derselben Daten zur Verfügung.

Sowohl bei einer automatisierungsgerätsseitigen Protokollierung wie auch bei einer Protokollierung in Bereich der Dokumentationsablage 36 kommt in Betracht, jeweils eine Referenz auf die jeweils abgerufenen Inhalte der Dokumentationsablage 36 als Bestandteil der Protokollierung zu erfassen. Eine solche Referenz eignet sich auf der einen Seite für statistische Zwecke, zum Beispiel um zu erkennen, auf welche Inhalte der Dokumentationsablage 36 besonders häufig zugegriffen wird, und auf der anderen Seite zur Beschleunigung des Zugriffs auf die Dokumentationsablage 36 indem anhand der Referenz unmittelbar ein Speicherort oder dergleichen der bereits früher in Zugriff genommenen Information bekannt ist und dieser nicht erneut ermittelt werden muss.

Für einen Betreiber eines im Internet 32 erreichbaren und als Dokumentationsablage 36 für eine Mehrzahl von Automatisierungsgeräten 10; 12-16 fungierenden Rechners 34 erlaubt eine Protokollierung von Zugriffen auf die Dokumentationsablage 36 durch jeweils ein Automatisierungsgerät 10 mit dabei aufgenommenen Daten, zum Beispiel einer Kennung 38, einer Statusinformation 28 und/oder einer resultierenden Anfrage 42 eine Auswertung einer Art der Zugriffe auf die Dokumentationsablage 36, insbesondere eine Auswertung einer Häufigkeit eines Zugriffs auf bestimmte Inhalte der Dokumentationsablage 36.

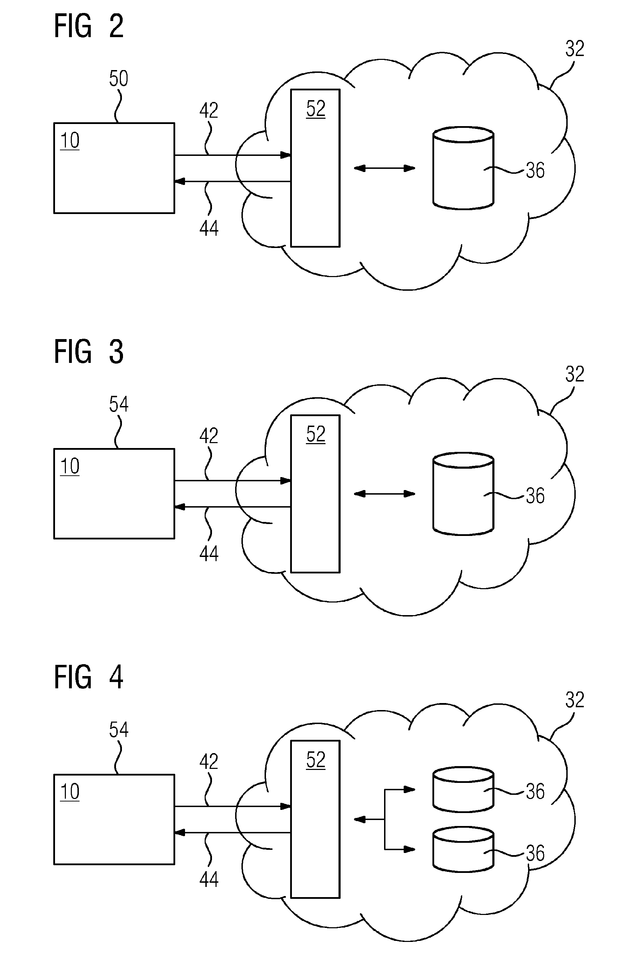

FIG 2 zeigt eine Situation grundsätzlich wie in FIG 1. Das dargestellte Automatisierungsgerät 10 fungiert als Engineeringsystem 50. Mit einem Engineeringsystem 50 lassen sich Steuerungsprogramme 22 (FIG 1) zur Steuerung und/oder Automatisierung technischer Prozesse 18 (FIG 1) erstellen. Bei der Erstellung solcher Programme 22 ist eine Möglichkeit zum Zugriff auf die Dokumentationsablage 36 besonders sinnvoll. Anfragen 42 und Antworten 44 gehen an bzw. kommen von einer Suchfunktionalität 52, die zum Beispiel eine Ontologie 40 (FIG 1) umfasst oder von einer Ontologie generierte Anfragen 42 auswertet und als Schnittstelle für den Zugriff auf die Dokumentationsablage 36 fungiert. Als Statusinformation 28, die sich hier nicht aus der Ausführung eines Steuerungsprogramms 22 oder einem Zustand des Automatisierungsgeräts 10 ergeben kann, kommt zum Beispiel eine Fehlermeldung bei der Erstellung eines Steuerungsprogramms 22 oder die Verwendung einer bestimmten Funktionalität des Ziel-Automatisierungsgeräts 10 oder die Verwendung einer bestimmten Softwarefunktionalität in Betracht.

FIG 3 zeigt eine Situation grundsätzlich wie in FIG 2. Ergänzend zu dem in FIG 2 gezeigten Szenario ist dargestellt, dass der Zugriff auf die Dokumentationsablage 36 auch mit einem als Laufzeitumgebung 54 fungierenden Automatisierungsgerät 10, also einem Automatisierungsgerät 10, das im Betrieb ein Steuerungsprogramm 22 ausführt, erfolgen kann.

FIG 4 zeigt schließlich, dass die Dokumentationsablage 36 auch eine verteilte, ggf. auch örtlich verteilte Dokumentationsablage 36 sein kann, zum Beispiel mit einer ersten Datenbasis mit Komponentendokumentation und einer zweiten Datenbasis mit Maschinendokumentation.

## Patentansprüche

1. Verfahren zum Betrieb eines Automatisierungsgeräts (10) mit einem Speicher (20), in den ein Steuerungsprogramm (22) ladbar ist, das im Betrieb des Automatisierungsgeräts (10) durch eine Verarbeitungseinheit (23) des Automatisierungsgeräts (10) zur Steuerung und/oder Überwachung eines technischen Prozesses (18) ausgeführt wird,
wobei ein im Speicher (20) vorgehaltenes Basisprogramm (24) des Automatisierungsgeräts (10) das Automatisierungsgerät (10) selbst und die Ausführung des Steuerungsprogramms (22) überwacht und Überwachungsergebnisse in einer im Speicher (20) abgelegten Statusinformation (28) protokolliert, **dadurch gekennzeichnet, dass** mit der Statusinformation (28) ein automatischer Zugriff auf eine Dokumentationsablage (36) auf einem im Internet (32) erreichbaren entfernten Rechner (34) erfolgt.

2. Verfahren nach Anspruch 1, wobei der automatische Zugriff auf die Dokumentationsablage (36) mit der Statusinformation (28) und einer das jeweilige Automatisierungsgerät (10) identifizierenden Kennung (38) erfolgt.

3. Verfahren nach Anspruch 1 oder 2, wobei der automatische Zugriff auf die Dokumentationsablage (36) zumindest mit der Statusinformation (28) und anhand einer im Speicher (20) vorgehaltenen, projektierbaren Ontologie (40) erfolgt.

4. Verfahren nach Anspruch 1, 2 oder 3, wobei Zugriffe auf die Dokumentationsablage (36) im Bereich der Dokumentationsablage (36) protokolliert werden, indem zumindest die das jeweilige Automatisierungsgerät (10) identifizierenden Kennung (38) gespeichert wird.

5. Verfahren nach Anspruch 1, 2, 3 oder 4, wobei Zugriffe auf die Dokumentationsablage (36) im Speicher (20) des Automatisierungsgeräts (10) protokolliert werden, indem Art und Umfang des Zugriffs auf die Dokumentationsablage (36) gespeichert werden.

6. Verfahren nach Anspruch 1, 2, 3, 4 oder 5, wobei Zugriffe auf die Dokumentationsablage (36) im Bereich der Dokumentationsablage (36) protokolliert werden, indem zumindest die Statusinformation (28), mit welcher der Zugriff auf die Dokumentationsablage (36) erfolgt ist, protokolliert wird.

7. Verfahren nach Anspruch 1, 2, 3, 4, 5 oder 6, wobei Zugriffe auf die Dokumentationsablage (36) im Bereich der Dokumentationsablage (36) protokolliert werden, indem jeweils zumindest eine Referenz auf die jeweils abgerufenen Inhalte der Dokumentationsablage (36) protokolliert wird.

8. Verfahren zum Betrieb zumindest eines im Internet (32) erreichbaren Rechners (34) als Dokumentationsablage (36) für eine Mehrzahl von Automatisierungsgeräten (10; 12-16) nach einem der vorangehenden Ansprüche, wobei Zugriffe durch jeweils ein Automatisierungsgerät (10) auf die Dokumentationsablage (36) protokolliert werden, und wobei im Rahmen der Protokollierung aufgenommene Daten eine Auswertung einer Häufigkeit eines Zugriffs auf bestimmte Inhalte der Dokumentationsablage (36) erlauben.

9. Computerprogramm mit Programmcode-Mitteln, um alle Schritte von jedem beliebigen der Ansprüche 1 bis 7 oder Anspruch 8 durchzuführen, wenn das Computerprogramm auf einem Automatisierungsgerät (10) zur Steuerung und/oder Überwachung eines technischen Prozesses (18) bzw. einem als Dokumentationsablage (36) fungierenden Rechner (34) ausgeführt wird.

10. Automatisierungsgerät (10) zur Steuerung und/oder Überwachung eines technischen Prozesses (18) mit einer Verarbeitungseinheit (24) und einem Speicher (20), in den ein Computerprogramm nach Anspruch 9 geladen ist, das im Betrieb des Automatisierungsgerät (10) durch die Verarbeitungseinheit (24) ausgeführt wird.

11. Als Dokumentationsablage (36) für eine Mehrzahl von Automatisierungsgeräten (10; 12-16) fungierender und im Internet (32) erreichbarer Rechner (34) mit einer Verarbeitungseinheit und einem Speicher, in den ein Computerprogramm nach Anspruch 9 geladen ist, das im Betrieb des Rechners (34) durch dessen Verarbeitungseinheit ausgeführt wird.
